# EUROPEAN PATENT APPLICATION

(11) **EP 4 009 167 A1**
(43) Date of publication of application: **08.06.2022**
(21) Application number: 20882712.1
(22) Date of filing: 20.10.2020
(51) Int. Cl.: G06F 9/455

(54) **INSTANTIATED REQUEST GENERATION METHOD, INTERFACE VIRTUAL MACHINE CONFIGURATION METHOD, NFVO, AND VIM**

(30) Priority: 31.10.2019 CN 201911063139
(71) Applicant: ZTE Corporation, Shenzhen, Guangdong 518057 (CN)
(72) Inventor: PAN, Jiaqiang, Shenzhen, Guangdong 518057 (CN)
(74) Representative: Savi, Massimiliano
(86) International application number: PCT/CN2020/122267
(87) International publication number: WO 2021/082992

(57) **Abstract**

An instantiation request generation method for a virtual network function is disclosed. The method includes: acquiring information of all external networks required by the virtual network function under a current deployment specification (S110); configuring network configuration parameters for each of the external networks according to the acquired information of all external networks (S120); and creating the external networks according to the network configuration parameters of the external networks required by instantiation to generate an instantiation request (S130).

## Description

### CROSS-REFERENCE TO RELATED APPLICATION

This application is filed on the basis of the Chinese patent application No. 201911063139.X filed on October 31, 2019, and claims priority of the Chinese patent application, the entire contents of which are incorporated herein by reference.

### TECHNICAL FIELD

This application relates to the field of wireless communication, and in particular, to an instantiation request generation method for a Virtual Network Function (VNF), an interface processing virtual machine configuration method for a VNF, a method of processing an external network for an interface processing virtual machine of a VNF, a Network Function Virtualization Orchestrator (NFVO), a Virtual Infrastructure Manager (VIM) and a virtual management system.

### BACKGROUND

A Network Functions Virtualization (NFV) technology involves virtualizing traditional network functions and deploying corresponding VNFs on a cloud virtual machine, so as to virtualize network functions.

After the virtualization of the network functions, elastic capacity expansion (i.e., an increase in the number of VNF virtual machines) or capacity reduction (i.e., a decrease in the number of VNF virtual machines) may be performed according to requirements of service load changes, so as to meet service-level agreement (SLA) requirements and save resources. A VNF interface processing virtual machine is a virtual machine through which a VNF communicates with the outside. A network in communicational connection with the interface processing virtual machine is an external network of the VNF. The external network of the VNF is created by the NFVO and transmitted to a Virtual Network Function Manager (VNFM) for use. The VNFM connects the interface processing virtual machine to the external network during the creation of the interface processing virtual machine.

At present, when the interface processing virtual machine is elastic, the external network needs to be created in a manual predefined manner. That is, whether an external network is used or not, the external network needs to be pre-created, which leads to a waste of resources.

### SUMMARY

According to some embodiments of this application, an instantiation request generation method for a VNF, an interface processing virtual machine configuration method for a VNF, a method of processing an external network for an interface processing virtual machine of a VNF, a NFVO, a VIM and a virtual management system are provided.

According to some embodiments of this application, an instantiation request generation method for a VNF is provided, including: acquiring information of all external networks required by the VNF under a current deployment specification; configuring network configuration parameters for each of the external networks according to the acquired information of all external networks; and creating the external networks according to the network configuration parameters of the external networks required by instantiation to generate an instantiation request.

According to some embodiments of this application, an interface processing virtual machine configuration method for a VNF is provided, including: generating, in response to an interface processing virtual machine capacity expansion request, a corresponding network creation request according to preset network configuration parameters corresponding to an external network involved in the interface processing virtual machine capacity expansion request, where the preset network configuration parameters corresponding to the external network involved in the interface processing virtual machine capacity expansion request are selected from network configuration parameters of all external networks determined in the instantiation request generation method according to this application.

According to some embodiments of this application, a method of processing an external network for an interface processing virtual machine of a VNF is provided, including: configuring, in response to a network creation request generated by the interface processing virtual machine configuration method according to this application, network parameters for an external network involved in the network creation request, so as to create an external network of the interface processing virtual machine.

According to some embodiments of this application, a NFVO is provided, including: a first storage apparatus storing a first application and/or a second application; and one or more first processors, where the first application, when executed by the one or more first processors, causes the one or more first processors to carry out the instantiation request generation method according to this application; and the second application, when executed by the one or more first processors, causes the one or more first processors to carry out the interface processing virtual machine configuration method according to this application.

According to some embodiments of this application, a VIM is provided, including: a second storage apparatus storing a third application; and one or more second processors, where the third application, when executed by the one or more first processors, causes the one or more first processors to carry out the method according to this application.

According to some embodiments of this application, a virtual management system is provided, including an NFVO, a VIM and a VNFM. The NFVO is the NFVO according to this application. The VIM is the VIM according to this application. The VNFM is configured to generate an interface processing virtual machine capacity expansion request and/or an interface processing virtual machine capacity reduction request.

### BRIEF DESCRIPTION OF DRAWINGS

The accompanying drawings are intended to provide further understanding of this application and constitute a part of the description, which are intended to illustrate this application together with specific implementations below, but do not limit this application, in which:
FIG. 1 is a flowchart of an implementation of an instantiation method for a VNF according to this application;
FIG. 2 is a flowchart of an implementation of an interface processing virtual machine configuration method for a VNF according to this application;
FIG. 3 is a flowchart of an implementation of a method of processing an external network according to this application;
FIG. 4 is a signaling diagram of an implementation of the instantiation method according to this application;
FIG. 5 is a signaling diagram of an implementation of manual capacity expansion of the VNF;
FIG. 6 is a signaling diagram of an implementation of automatic capacity expansion of the VNF;
FIG. 7 is a signaling diagram of an implementation of manual capacity reduction of the VNF; and
FIG. 8 is a signaling diagram of an implementation of automatic capacity reduction of the VNF.

### DETAILED DESCRIPTION

Implementations of this application are described in detail below in conjunction with the accompanying drawings. It should be understood that the implementations described herein are intended only to describe and illustrate this application, but are not to limit this application.

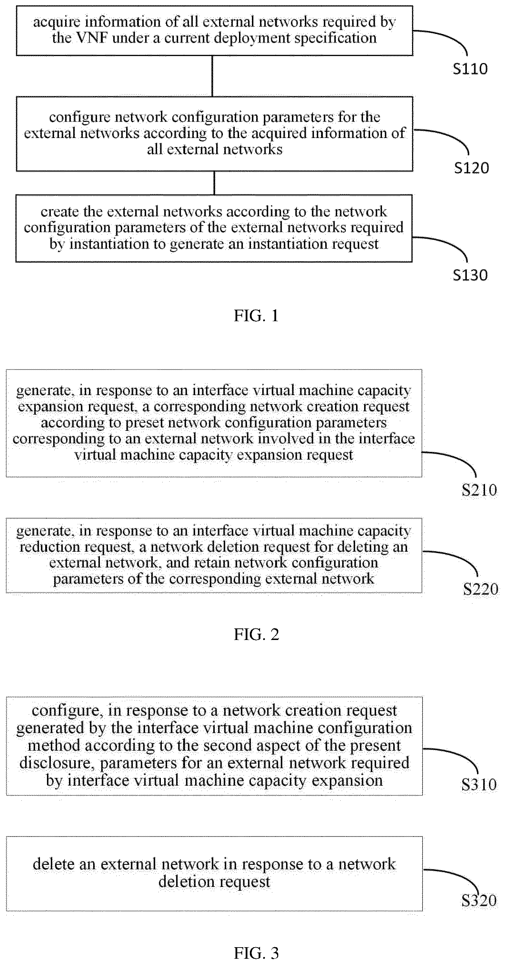

According to some embodiments of this application, an instantiation request generation method for a VNF is provided. As shown in FIG. 1, the instantiation request generation method includes the following steps.

At step S110, information of all external networks required by the VNF under a current deployment specification is acquired.

At step S120, network configuration parameters for each of the external networks are configured according to the acquired information of all external networks.

At step S130, the external networks are created according to the network configuration parameters of the external networks required by instantiation to generate an instantiation request.

The instantiation request generation method according to the embodiments of this application is performed by a NFVO. The instantiation request finally generated is sent to a VNFM. The VNFM calculates a resource description list of virtual machine, network and storage required by instantiation according to the instantiation request, and sends a resource operation authorization request to the NFVO.

In an embodiment, the NFVO sends an acknowledgment message to the VNFM after receiving the resource operation authorization request.

When the instantiation request generation method is performed, the network configuration parameters of all the external networks required by the VNF under the current deployment specification, rather than only the external network configuration parameters required by the instantiation, are saved. Correspondingly, when an interface processing virtual machine configuration method for a VNF is performed, network configuration parameters of external networks that have been stored are directly invoked, and then an external network required by interface processing virtual machine capacity expansion is configured according to the network configuration parameters, so as to create the external network without pre-creation of the external network. Compared with the pre-creation of the external network, pre-storage of the network configuration parameters of the external network saves network resources.

How to perform the interface processing virtual machine configuration method for a VNF by utilizing the network configuration parameters saved during instantiation will be described below, which is not described in detail here.

In this application, how to acquire information of all external networks required by a VNF is not limited. As an optional implementation, the information of all the external networks required by the VNF under the current deployment specification may be obtained by parsing a Virtualized Network Function Descriptor (VNFD) of the VNF.

In order to reduce the calculation difficulty, in this application, the information of the external network may include network identification information of the external network and information of external connection nodes of a VNF which are connected to the external network.

In accordance with an aspect of this application, an interface processing virtual machine configuration method for a VNF is provided. As shown in FIG. 2, the interface processing virtual machine configuration method includes the following steps.

At step S210, in response to an interface processing virtual machine capacity expansion request, a corresponding network creation request is generated according to preset network configuration parameters corresponding to an external network involved in the interface processing virtual machine capacity expansion request. The preset network configuration parameters corresponding to the external network involved in the interface processing virtual machine capacity expansion request are selected from network configuration parameters of all external networks determined in the instantiation request generation method mentioned in the first aspect of this application.

It is to be noted that, in this application, "interface processing virtual machine configuration" includes two situations, of which one is "interface processing virtual machine capacity expansion" and the other is "interface processing virtual machine capacity reduction".

In the interface processing virtual machine configuration method according to this application, an external network does not need to be created before the interface processing virtual machine capacity expansion request is received, and it is only necessary to pre-configure and save network configuration parameters of external networks before the interface processing virtual machine capacity expansion request is received (during instantiation), so as to save network resources.

Information carried in the interface processing virtual machine capacity expansion request may include identification information of the external network required by interface processing virtual machine capacity expansion, and identification information of an external connection node connected to the external network required by interface processing virtual machine capacity expansion. That is, external networks for networking are specified in the interface processing virtual machine capacity expansion request.

The interface processing virtual machine configuration method according to this application may also be performed by an NFVO. The network creation request generated at step S210 is sent to a VIM. The VIM, after receiving the network creation request, configures the external network according to the corresponding network configuration parameters, so as to create the external network corresponding to the interface processing virtual machine of the VNF.

It is to be further noted that the interface processing virtual machine capacity expansion request is sent by the VNFM. As described above, information carried in the interface processing virtual machine capacity expansion request includes identification information of the external network required by interface processing virtual machine capacity expansion and/or identification information of an external connection node of the VNF connected to the external network required by the interface processing virtual machine capacity expansion.

To shorten the time required to query for the network configuration parameters, as an optional implementation, a mapping table between identification information of the external network and/or identification information of an external connection node connected to the external network required by the interface processing virtual machine capacity expansion and network configuration parameters of the external network may be established. The mapping table is stored in the NFVO.

Correspondingly, in the case that the information carried in the interface processing virtual machine capacity expansion request is identification information of the external network device required by interface processing virtual machine capacity expansion, the step of generating a corresponding network creation request according to preset network configuration parameters corresponding to an external network involved in the interface processing virtual machine capacity expansion request may include the following steps.

The mapping table is queried according to the identification information of the external network required by the interface processing virtual machine capacity expansion, so as to determine network configuration parameters of a to-be-networked external network.

The network creation request is generated according to the network configuration parameters obtained by query.

In an embodiment, in the case that the information carried in the interface processing virtual machine capacity expansion request is identification information of an external connection node connected to the external network required by the interface processing virtual machine capacity expansion, the step of generating a corresponding network creation request according to preset network configuration parameters corresponding to an external network involved in the interface processing virtual machine capacity expansion request may include the following steps.

The mapping table is queried according to the identification information of the external connection node, so as to determine network configuration parameters of a to-be-networked external network.

The network creation request is generated according to the network configuration parameters obtained by query.

In this application, how to generate the "interface processing virtual machine capacity expansion request" is not limited. For example, the interface processing virtual machine capacity expansion request may be generated in response to manual configuration of capacity expansion parameters by a user, or automatically generated during the operation of the VNF. The two manners of generating the interface processing virtual machine capacity expansion request are introduced below respectively.

The step of generating the interface processing virtual machine capacity expansion request in response to manual configuration of capacity expansion parameters by a user is introduced first.

An elastic capacity expansion operation of the interface processing virtual machine is initiated on the NFVO. The NFVO receives elastic capacity expansion parameters entered by the user (the elastic capacity expansion parameters include at least one of virtualisation deployment unit (VDU) information and VDU instance data of the VNF, AspectID (i.e., a scaling aspect ID of the VNF) and a step size, and levelID of the VNF (i.e., a deployment level of the VNF), and other necessary elastic capacity expansion parameters), and initiates an elastic capacity expansion request to the VNFM.

The VNFM calculates a virtual resource description list (including a virtual machine, a port, a network and so on) to be added during this capacity expansion according to the received elastic capacity expansion request and the elastic capacity expansion parameters entered by the user.

When the VNFM finds upon calculation that an interface processing virtual machine needs to be added during this capacity expansion and an external network required by the interface processing virtual machine does not exist, the VNFM generates the interface processing virtual machine capacity expansion request.

The step of automatically generating the interface processing virtual machine capacity expansion request is introduced below.

During the operation of the VNF, when the VNFM detects that elastic capacity expansion needs to be performed on the VNF, the VNFM calculates a virtual resource description list (including a virtual machine, a port, a network and so on) to be added during this capacity expansion.

When the VNFM based on the list finds that an interface processing virtual machine to be added during this capacity expansion and an external network required by the interface processing virtual machine do not exist, the VNFM generates the interface processing virtual machine capacity expansion request.

As described above, in addition to "capacity expansion", "interface processing virtual machine configuration" further includes "capacity reduction". Correspondingly, the interface processing virtual machine configuration method further includes the following step.

At step S220, in response to an interface processing virtual machine capacity reduction request, a network deletion request for deleting an external network is generated, and network configuration parameters of the corresponding external network are retained. Information carried in the interface processing virtual machine capacity reduction request includes identification information of a to-be-deleted external network and/or identification information of an external connection node connected to the to-be-deleted external network.

In this application, only the external network is deleted, but the network configuration parameters corresponding to the external network are not deleted. In this way, a network creation request can be generated by reutilizing the network configuration parameters when the interface processing virtual machine is expanded again.

Similar to the interface processing virtual machine capacity expansion request, the interface processing virtual machine capacity reduction request may be generated in response to manual configuration of capacity reduction parameters by a user, or automatically generated during the operation of the VNF. The two manners of generating the interface processing virtual machine capacity reduction request are introduced below respectively.

The step of generating the interface processing virtual machine capacity expansion request in response to manual configuration of capacity expansion parameters by a user is introduced first.

An elastic capacity reduction operation of the interface processing virtual machine is initiated on the NFVO. The NFVO receives elastic capacity reduction parameters entered by the user (the elastic capacity reduction parameters include at least one of VDU information and VDU instance data of the VNF, AspectID (i.e., a scaling aspect ID of the VNF), a step size, and levelID of the VNF (i.e., a deployment level of the VNF), and other necessary elastic capacity reduction parameters), and initiates an elastic capacity reduction request to the VNFM.

The VNFM calculates a virtual resource description list (including a virtual machine, a port, a network and so on) to be deleted by this capacity reduction operation according to the received elastic capacity reduction request and the elastic capacity reduction parameters entered by the user.

The VNFM initiates a resource operation authorization request to an NFVO module.

The NFVO agrees the resource operation request of the VNFM module.

The VNFM initiates a request for deleting the virtual resources to be deleted by this capacity reduction operation to the VIM.

The VNFM, when detecting that an interface processing virtual machine needs to be reduced in this operation and an external network used by the interface processing virtual machine is no longer used by other virtual machines, initiates, to the NFVO, the interface processing virtual machine capacity reduction request for the VNF to delete the external network.

The step of automatically generating the interface processing virtual machine capacity reduction request is introduced below.

During the operation of the VNF, when the VNFM detects that elastic capacity reduction needs to be performed on the VNF, the VNFM calculates a virtual resource description list (including a virtual machine, a port, a network and so on) to be deleted during this elastic capacity reduction.

The VNF is notified to migrate services from a virtual machine to be reduced.

The VNFM, after detecting that the VNF has migrated the services, initiates a request for operating the virtual resources to the NFVO.

The NFVO agrees the resource operation request of the VNFM.

The VNFM initiates a request for deleting the virtual resources to be deleted by this capacity reduction operation to the VIM.

The VNFM, when finding that an interface processing virtual machine needs to be reduced in this operation and an external network used by the interface processing virtual machine is no longer used by other virtual machines, generates the interface processing virtual machine capacity reduction request.

In accordance with an aspect of this application, a method of processing an external network for an interface processing virtual machine of a VNF is provided. As shown in FIG. 3, the method of processing an external network includes the following step.

At step S310, in response to a network creation request generated by the interface processing virtual machine configuration method according to the second aspect of this application, network parameters are configured for an external network involved in the network creation request, so as to create an external network of the interface processing virtual machine.

When the external network is created with the method of processing an external network according to this application, it is only necessary to pre-configure and store network configuration parameters required by each of external networks when networking, which does not require pre-networking, thereby saving network resources.

The step of elastic capacity expansion of the interface processing virtual machine is mentioned in step S310. The step of elastic capacity reduction of the interface processing virtual machine is introduced below. Correspondingly, the method further includes the following step.

At step S320, an external network is deleted in response to a network deletion request.

In accordance with an aspect of this application, an NFVO is provided, including:
a first storage apparatus storing a first application and/or a second application; and
one or more first processors, where the first application, when executed by the one or more first processors, causes the one or more first processors to carry out the instantiation request generation method according to the aspect of this application; and
the second application, when executed by the one or more first processors, causes the one or more first processors to carry out the interface processing virtual machine configuration method according to the aspect of this application.

Working principles and beneficial effects of the instantiation request generation method and the interface processing virtual machine configuration method have been described in detail above, which are not repeated herein.

In accordance with an aspect of this application, a VIM is provided, including:
a second storage apparatus storing a third application; and
one or more second processors, where the third application, when executed by the one or more first processors, causes the one or more first processors to carry out the method of processing an external network for an interface processing virtual machine of a VNF according to the aspect of this application.

Advantages and beneficial effects of the method of processing an external network for an interface processing virtual machine of a VNF have been described in detail above, which are not repeated herein.

In this application, functions of the VNF are not limited. For example, the VNF may be a Mobility Management Entity (MME) network function.

In accordance with an aspect of this application, a virtual management system is provided, including an NFVO, a VIM and a VNFM.

The NFVO is the NFVO according to this application, and the VIM is the VIM according to this application. The VNFM is configured for creating, according to the instantiation request, an external network required by instantiation, and the VNFM is configured for generating an interface processing virtual machine capacity expansion request and/or an interface processing virtual machine capacity reduction request.

Certainly, in addition to the NFVO module and the VIM module, the cloud virtual machine server may further include a VNFM module.

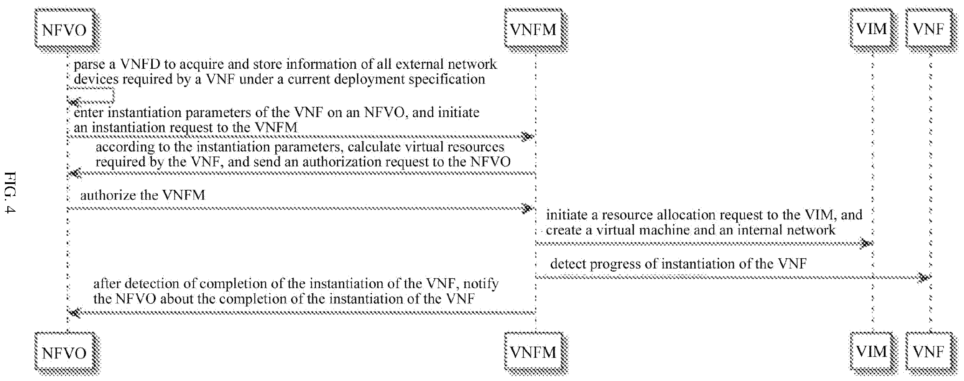

The implementation of the instantiation method according to this application is described in detail below in conjunction with the signaling diagram shown in FIG. 4.

An instantiation operation of the VNF is initiated on the NFVO module. The NFVO module parses the VNFD of the VNF to acquire all external network devices required by the VNF under current deployment specification and parameters required by instantiation of the VNF. The user configures parameters required by the external networks are obtained by networking of all the external network devices on an input interface, and saves information of all the external network devices and configuration parameters of the networking of the external network devices in the NFVO module.

The NFVO module creates only the external networks required by the instantiation. The user, after entering the parameters required by instantiation of the VNF on the interface of the NFVO module, initiates an instantiation request of the VNF to the VNFM module through NFVO module.

The VNFM module calculates, according to the entered parameters and the VNFD, a resource description list of virtual machine, network and storage required by the instantiation of the VNF and sends a resource operation authorization request to the NFVO module.

The NFVO module responds to the authorization request of the VNFM module.

The VNFM module initiates, to the VIM module, virtual resources required by the creation of instantiation of the VNF, including a virtual machine and an internal network of the VNF.

The VNFM module, after creating the virtual resources, detects progress of the instantiation of the VNF.

The VNFM module, after detecting the completion of the instantiation of the VNF, notifies the NFVO module that the instantiation is completed.

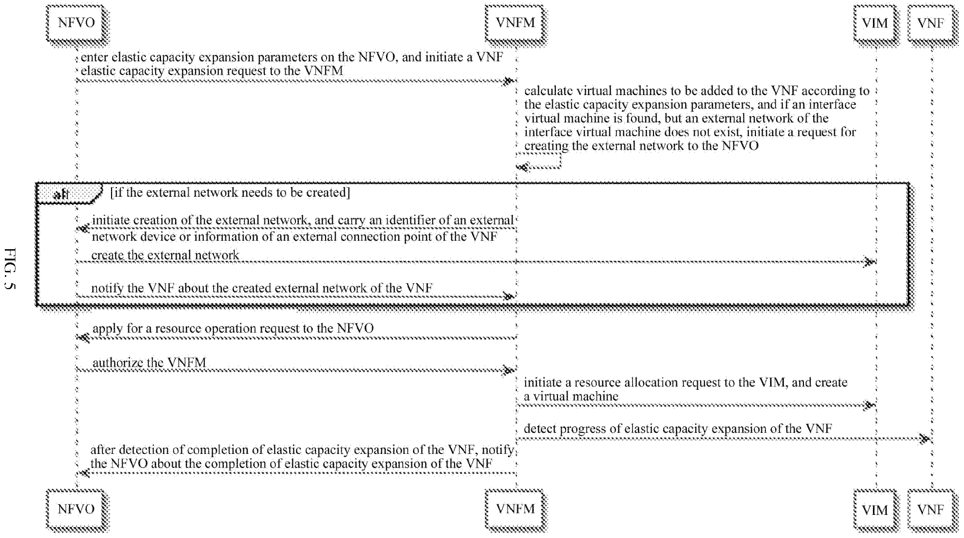

An implementation of performing capacity expansion manually according to the interface processing virtual machine configuration method for a VNF is described in detail in conjunction with the signaling diagram shown in FIG. 5.

An elastic capacity expansion operation of the VNF is initiated on the NFVO module. The user prepares elastic capacity expansion parameters of the VNF on the NFVO module, such as VDU information and VDU instance data of the VNF, or AspectID (a scaling aspect ID of the VNF) and a step size, or levelID of the VNF (a deployment level of the VNF), and other necessary elastic capacity expansion parameters, and initiates an elastic capacity expansion request to the VNFM.

The VNFM module calculates, according to the elastic capacity expansion request and the entered parameters, a resource description list of virtual resource which will be added in this operation, such as a virtual machine, a port and a network. When the VNFM module finds that an interface processing virtual machine needs to be added in this operation but an external network required by the interface processing virtual machine does not exist, the external network needs to be created.

The VNFM module initiates, to the NFVO module, an elastic capacity expansion request for creating the external network. The elastic capacity expansion request carries identification information of the external network or identification information of an external connection node connected to the external network.

After receiving the elastic capacity expansion request for creating the external network of the VNF, the NFVO module finds, according to the identification information of the external network or the identification information of the external connection node connected to the external network carried in the elastic capacity expansion request, external networks and network configuration parameters that have been saved during the instantiation, and initiates a request for creating the network to the VIM.

The NFVO module, after detecting that the VIM module has created the network according to the corresponding network configuration parameters, sends network information to the VNFM module.

The VNFM module initiates a resource operation authorization request to the NFVO module.

The NFVO module agrees the resource operation request of the VNFM module.

The VNFM module creates virtual machine resources and an interface processing virtual machine required by this capacity expansion, and connects the interface processing virtual machine to the external network.

The VNFM module detects progress of elastic capacity expansion of the VNF.

The VNFM module, after detecting the completion of the capacity expansion of the VNF, notifies the NFVO module that the capacity expansion operation is completed.

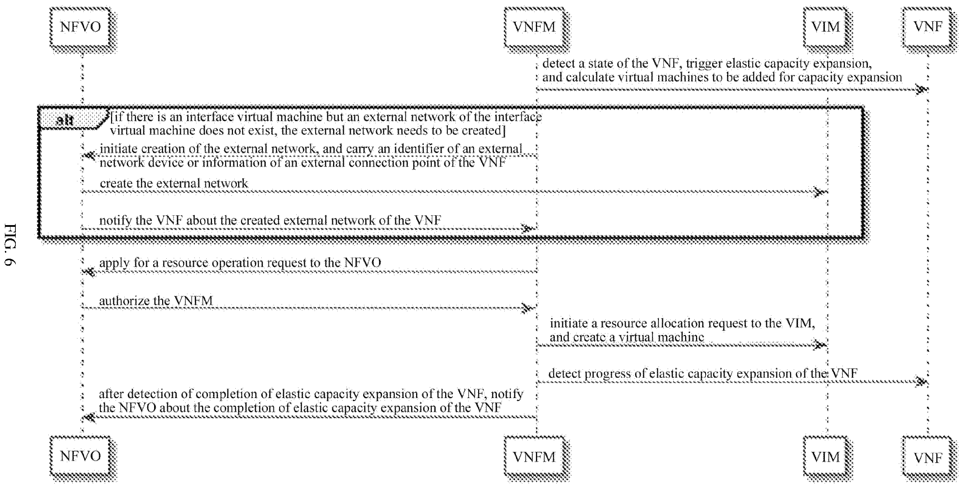

An implementation of performing capacity expansion automatically according to the interface processing virtual machine configuration method for a VNF is described in detail with reference to the signaling diagram shown in FIG. 6.

During normal operation of the VNF, when the VNFM module detects that the VNF needs to be expanded elastically, the VNFM module calculates a resource description list of virtual resource which will be added in this operation, such as a virtual machine, a port and a network.

When finding that an interface processing virtual machine needs to be added in this operation but an external network required by the interface processing virtual machine does not exist, the VNFM module initiates an elastic capacity expansion request to the NFVO module. The elastic capacity expansion request carries identification information of the external network or identification information of an external connection node connected to the external network.

After receiving the request for creating the external network of the VNF, the NFVO module finds, according to the identification information of the external network or the identification information of the external connection node connected to the external network carried in the request, external networks and network configuration parameters that have been saved during the instantiation, and initiates a request for creating the network to the VIM module.

The NFVO module, after detecting that the VIM module has created the network, sends network information to the VNFM module.

The VNFM module initiates a resource operation authorization request to the NFVO module.

The NFVO module agrees the resource operation request of the VNFM module.

The VNFM module creates virtual resources and an interface processing virtual machine required by this capacity expansion, and connects the interface processing virtual machine to the external network.

The VNFM module detects progress of capacity expansion of the VNF.

The VNFM module, after detecting the completion of the capacity expansion of the VNF, notifies the NFVO module that the capacity expansion operation is completed.

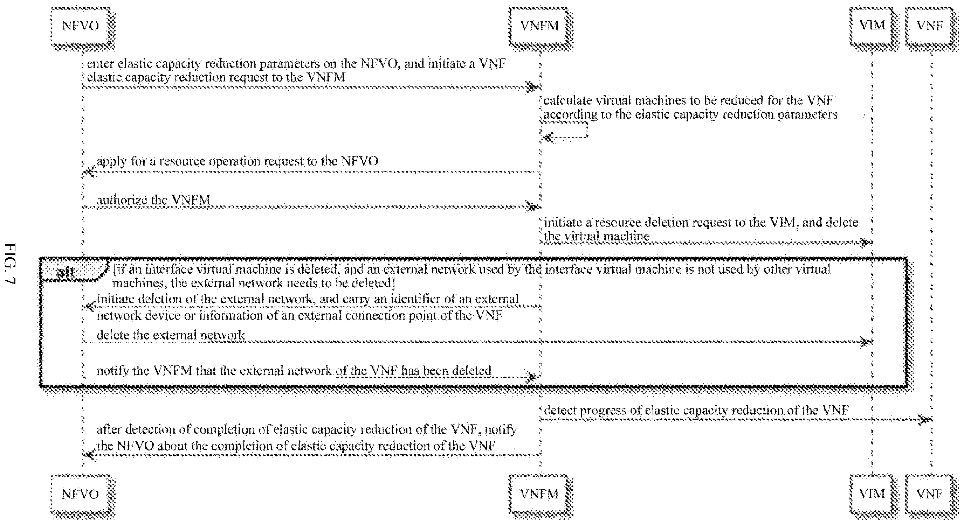

An implementation of performing capacity reduction manually according to the interface processing virtual machine configuration method for a VNF is described in detail with reference to the signaling diagram shown in FIG. 7.

An elastic capacity reduction operation of the VNF is initiated on the NFVO module. The user enters elastic capacity reduction parameters of the VNF on the NFVO module, such as VDU information and VDU instance data of the VNF, or AspectID and a step size, or levelID of the VNF, and other necessary elastic capacity reduction parameters, and initiates an elastic capacity reduction request to the VNFM module.

The VNFM module calculates, according to the elastic capacity reduction request and the entered parameters, a resource description list of virtual resource which will be deleted in this operation, such as a virtual machine, a port and a network.

The VNFM module initiates a resource operation authorization request to the NFVO module.

The NFVO module agrees the resource operation request of the VNFM module.

The VNFM module initiates a request for deleting the virtual resources to be deleted in this operation to the VIM module.

When determining that an interface processing virtual machine needs to be reduced in this operation and an external network used by the interface processing virtual machine is no longer used by other virtual machines, the VNFM module sends an elastic capacity reduction request to the NFVO module. The elastic capacity reduction request carries identification information of the external network or identification information of an external connection node connected to the external network.

After receiving the elastic capacity reduction request, the NFVO module initiates a request for deleting the network to the VIM module, but network configuration information is still retained on the NFVO module.

The NFVO module notifies the VNFM module that the external network of the VNF has been deleted.

The VNFM module detects progress of elastic capacity reduction of the VNF module.

The VNFM module, after detecting the completion of the capacity reduction of the VNF, notifies the NFVO module that this operation is completed.

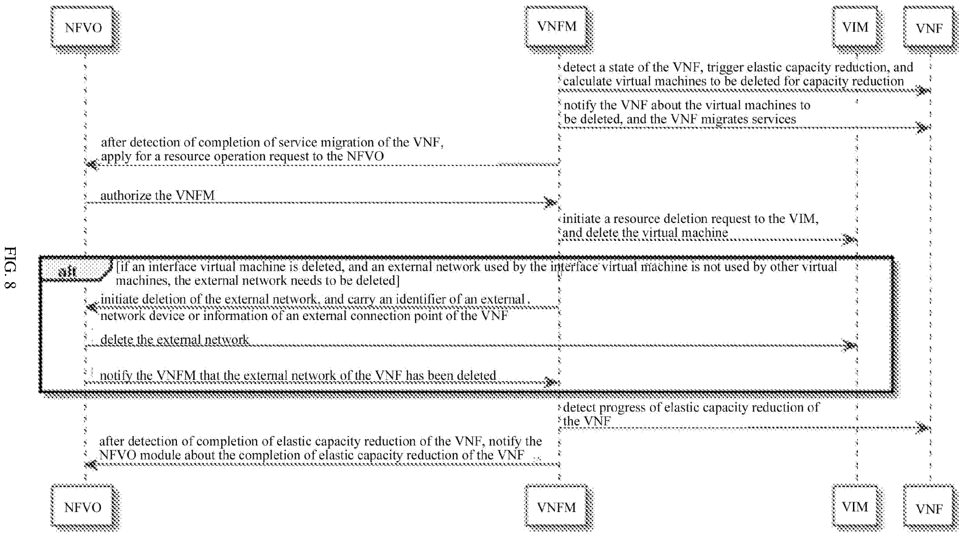

An implementation of performing capacity reduction automatically according to the interface processing virtual machine configuration method for a VNF is described in detail with reference to the signaling diagram shown in FIG. 8.

During normal operation of the VNF, the VNFM calculates a resource description list of virtual machine to be deleted when detecting that the VNF needs to be reduced elastically.

The VNF is notified to migrate services from a virtual machine to be reduced.

The VNFM module, after detecting that the VNF has migrated the services, initiates a request for operating the virtual resources to the NFVO module.

The NFVO module agrees the resource operation request of the VNFM.

The VNFM module initiates a request for deleting the virtual resources to be deleted in this operation to the VIM module.

When determining that an interface processing virtual machine needs to be reduced in this operation and an external network used by the interface processing virtual machine is no longer used by other virtual machines, the VNFM module sends an elastic capacity reduction request for deleting the external network of the VNF to the NFVO module. The elastic capacity reduction request carries identification information of the external network or identification information of an external connection node connected to the external network.

After receiving the request for deleting the external network of the VNF, the NFVO module initiates a request for deleting the network to the VIM module, but network configuration information is still retained on the NFVO module.

The VNFM module notifies the NFVO module that the external network has been deleted.

The VNFM module detects progress of elastic capacity reduction of the VNF.

The VNFM, after detecting the completion of the capacity reduction of the VNF, notifies the NFVO module that this operation is completed.

It should be understood that the above implementations are only illustrative implementations used to illustrate the principles of this application, but this application is not limited thereto. Those having ordinary skills in the art can make various variations and improvements without departing from the essence of this application. Such variations and improvements also fall within the protection scope of this application.

## Claims

1. An instantiation request generation method for a virtual network function, VNF, comprising:
acquiring information of all external networks required by the VNF under a current deployment specification;
configuring network configuration parameters for each of the external networks according to the acquired information of all the external networks; and
creating the external networks according to the network configuration parameters of the external networks required by instantiation to generate an instantiation request.

2. The instantiation request generation method of claim 1, wherein the step of acquiring information of all external networks required by the VNF comprises:
parsing a Virtualized Network Function Descriptor, VNFD, of the VNF, to obtain the information of all the external networks required by the VNF under the current deployment specification.

3. An interface processing virtual machine configuration method for a virtual network function, VNF, comprising:
generating, in response to an interface processing virtual machine capacity expansion request, a corresponding network creation request according to preset network configuration parameters corresponding to an external network involved in the interface processing virtual machine capacity expansion request, wherein the preset network configuration parameters corresponding to the external network involved in the interface processing virtual machine capacity expansion request are selected from network configuration parameters of all external networks determined in the instantiation request generation method of claim 1 or 2.

4. The interface processing virtual machine configuration method of claim 3, wherein information carried in the interface processing virtual machine capacity expansion request comprises identification information of the external network required by interface processing virtual machine capacity expansion and/or identification information of an external connection node connected to the external network required by the interface processing virtual machine capacity expansion.

5. The interface processing virtual machine configuration method of claim 3 or 4, further comprising:
generating, in response to an interface processing virtual machine capacity reduction request, a network deletion request for deleting an external network, and retaining network configuration parameters of the corresponding external network, wherein information carried in the interface processing virtual machine capacity reduction request comprises identification information of a to-be-deleted external network and/or identification information of an external connection node connected to the to-be-deleted external network.

6. A method of processing an external network for an interface processing virtual machine of a virtual network function, VNF, comprising:
configuring, in response to a network creation request generated by the interface processing virtual machine configuration method of claim 3 or 4, network parameters for an external network involved in the network creation request, so as to create an external network of the interface processing virtual machine.

7. The method of claim 6, further comprising:
deleting an external network in response to a network deletion request.

8. A Network Function Virtualization Orchestrator, NFVO, comprising:
a first storage apparatus storing a first application and/or a second application; and
at least one first processor, wherein the first application, when executed by the at least one first processor, causes the at least one first processor to perform the instantiation request generation method of claim 1 or 2; and the second application, when executed by the at least one first processor, causes the at least one first processor to perform the interface processing virtual machine configuration method of any one of claims 3 to 5.

9. A Virtual Infrastructure Manager, VIM, comprising:
a second storage apparatus storing a third application; and
at least one second processor, wherein the third application, when executed by the at least one first processor, causes the at least one first processor to perform the method of claim 6 or 7.

10. A virtual management system, comprising a Network Functions Virtualization Orchestrator, NFVO, a Virtual Infrastructure Manager, VIM, and a Virtual Network Function Manager, VNFM, wherein the NFVO is the NFVO of claim 8, and the VIM is the VIM of claim 9, and
wherein the VNFM is configured for generating an interface processing virtual machine capacity expansion request and/or an interface processing virtual machine capacity reduction request.
